# EUROPÄISCHE PATENTSCHRIFT

(11) **EP 1 273 247 B1**
(45) Veröffentlichungstag und Bekanntmachung des Hinweises auf die Patenterteilung: **23.08.2006**
(21) Anmeldenummer: 02014826.8
(22) Anmeldetag: 03.07.2002
(51) Int. Cl.: A47B 9/04, A47B 9/20

(54) **Elektromotorischer Antrieb**
Electromotive drive
Entraînement à moteur électrique

(30) Priorität: 05.07.2001 DE 20111205 U
(43) Veröffentlichungstag der Anmeldung: 08.01.2003
(73) Patentinhaber: Dewert Antriebs- und Systemtechnik GmbH, 32278 Kirchlengern (DE)
(72) Erfinder: Haneball, Frank, 32839 Steinheim (DE); Bokämper, Ralf, 32312 Lübbecke (DE)
(74) Vertreter: Specht, Peter

(56) Entgegenhaltungen:
- EP-A- 0 831 250
- EP-A- 1 097 657
- CH-A- 678 174
- DE-A- 19 743 129
- US-A- 5 144 738

## Beschreibung

Die Erfindung bezieht sich auf einen elektromotorischen Möbelantrieb, insbesondere auf einen Teleskopantrieb, mit einem Antriebsmotor, einem die Motordrehzahl herabsetzenden, ein Getriebegehäuse aufweisendes Getriebe, mit einem feststehenden und wenigstens einem ausfahrbaren Führungsrohr und mit einer rotierend antreibbaren, in Längsrichtung der Führungsrohre stehende Spindel.

Der in Frage kommende elektromotorische Möbelantrieb könnte auch als Stellantrieb, Hubsäule, Linearantrieb oder dergleichen bezeichnet werden. Ein solcher Möbelantrieb wird beispielsweise verwendet, um die Tischplatte eines Tisches in der Höhe zu verstellen.

Bei einem aus der EP 0 831 250 bekannten Linearantrieb wird von einem Antriebsmotor eine quer zur Drehachse des Motors stehende Spindel angetrieben. Zwischen dem Antriebsmotor und der Spindel ist ein die Motordrehzahl reduzierender Antriebszug angeordnet. Auf diese Spindel ist eine Mutter aufgesetzt, deren Außenkontur der Innenkontur eines feststehenden Führungsrohres entspricht, so dass sie gegen Drehung gesichert ist. Die Mutter weist außerdem an der dem Antriebsmotor abgewandten Seite einen zylindrischen Ansatz auf, auf den ein ausfahrbares Führungsrohr festgelegt ist. Je nach der Drehrichtung des Antriebsmotors wird diese Mutter ein- oder ausgefahren. Über ein Anschlussteil kann dieses ausfahrbares Führungsrohr mit einem zu verstellenden Bauteil gekoppelt werden.

Es ist keine kompakte Bauweise gegeben, so dass er für die bei Möbeln als eng anzusehenden Einbauräume nicht geeignet ist. Darüber hinaus werden relativ viele Antriebsteile benötigt.

Der Erfindung liegt die Aufgabe zugrunde, einen elektromotorischen Möbelantrieb der eingangs näher beschrieben Art so zu gestalten, dass mit einer geringstmöglichen Anzahl von Bauteilen eine entsprechend kompakte Bauweise erreicht wird.

Die gestellte Aufgabe wird gelöst, indem das Getriebegehäuse schließend in einem Führungsrohr angeordnet ist, und dass der Antriebsmotor seitlich neben dem das Getriebegehäuse aufnehmenden Führungsrohr angeordnet ist.

Der Erfindung liegt die Aufgabe zugrunde, einen elektromotorischen Antrieb der eingangs näher beschrieben Art so zu gestalten, daß er mit einer geringstmöglichen Anzahl von Bauteilen eine entsprechend kompakte Bauweise erreicht wird.

Die gestellte Aufgabe wird gelöst, indem das Getriebegehäuse schließend in einem Führungsrohr derart angeordnet ist, daß eine rotierend antreibbare Spindel in Längsrichtung des Führungsrohres steht.

In einfachster Weise wird nunmehr das Getriebegehäuse direkt in das Führungsrohr eingebracht. Dadurch wird für den elektromotorischen Antrieb eine minimale Anzahl von Bauteilen benötigt. Auch die antriebstechnische Verbindung zwischen dem Getriebe und der Spindel ist äußerst einfach. Der Antriebsmotor des elektromotorischen Antriebs ist zweckmäßigerweise seitlich neben dem das Getriebegehäuse aufnehmenden Führungsrohr angeordnet. Auch dadurch wird zur antriebstechnischen Verbindung zwischen dem Getriebe und dem Antriebsmotor die Anzahl der benötigten Bauteile minimiert. In vorteilhafter Weise liegt der Abtriebszapfen des Antriebsmotors gegenüber der Mittellängsachse des zugehörigen Führungsrohres versetzt. Es bietet sich dann an, als Getriebe einen an sich bekannten Schneckentrieb zu verwenden, wobei die Schnecke auf den Abtriebszapfen des Antriebsmotor drehfest aufgesetzt sein kann oder der Abtriebszapfen selbst die Schneckenwindungen aufweist. Zur Festlegung des Antriebsmotors ist vorgesehen, daß das Getriebegehäuse wenigstens zwei Schraubkanäle aufweist, durch die Befestigungsschrauben geführt sind, so daß die dem Getriebegehäuse zugewandte Stirnfläche des Antriebsmotors gegen das Getriebegehäuse gezogen werden kann. Das Getriebegehäuse wird nun am Führungsrohr beispielsweise mit Schrauben ein- oder beidseitig befestigt. Außerdem ist eine derartige Anordnung äußerst montagefreundlich.

In weiterer Ausgestaltung ist noch vorgesehen, daß die Stellung des Antriebsmotors zum Getriebe mittels einer Justiereinrichtung einstellbar ist. Es läßt sich dann beispielsweise das Spiel zwischen der Schnecke und dem Schneckenrad einstellen. Die Justiereinrichtung besteht zweckmäßigerweise aus wenigstens einer Justierschraube, die parallel und im Abstand zu den Befestigungsschrauben zur Festlegung des Antriebsmotors verläuft. Diese Justierschraube bzw. die Justierschrauben sollten möglichst in gleichen Abständen zu den Befestigungsschrauben stehen, damit kein Kippmoment erzeugt wird. Die Außenkontur des Getriebegehäuses sollte in bevorzugter Ausführung der Innenkontur des zugehörigen Führungsrohres entsprechen oder annähemd entsprechen. Es ist zweckmäßig, wenn der elektromotorische Antrieb mit einer Einrichtung zur Positionserkennung des verstellbaren Bauteils ausgerüstet ist. Dies kann auf vielfältige Weise erfolgen. So ist es denkbar, daß das Schneckenrad einen drehfest aufgesetzten, als Impulsgeber wirkenden Ring aufweist. Bei jeder Umdrehung des Schneckenrades wird eine bestimmte Anzahl von Impulsen mittels eines geeigneten Sensors erzeugt. Es ist auch eine mechanische Lösung denkbar, beispielsweise indem in der Länge nicht veränderbaren Seile auf- und abgewickelt werden.

In besonders vorteilhafter Weise ist der Antriebsmotor in einem kastenartigen Gehäuse angeordnet, dessen obere Wandung oder ein Deckel das Getriebegehäuse bzw. das das Getriebe aufnehmende Führungsrohr übergreift. Dadurch wird für ein zu verstellendes Möbelbauteil, beispielsweise eine Tischplatte eine relativ große Auflagefläche geschaffen. Für eine solche Ausführung ist es dann vorteilhaft, wenn das Getriebe im oberen Endbereich des ausfahrbaren Führungsrohres angeordnet ist. Das Getriebe und der Antriebsmotor folgen dann synchron der Bewegung des zu verstellenden Möbelbauteiles.

Anhand der beiliegenden Zeichnungen wird die Erfindung noch näher erläutert. Es zeigt:
- Figur 1: den oberen Bereich eines Führungsrohres mit dem Getriebe und dem Antriebsmotor, wobei das Führungsrohr und das den Motor aufnehmende Gehäuse aufgeschnitten sind,
- Figur 2: den oberen Bereich eines Führungsrohres in einer Ansicht.

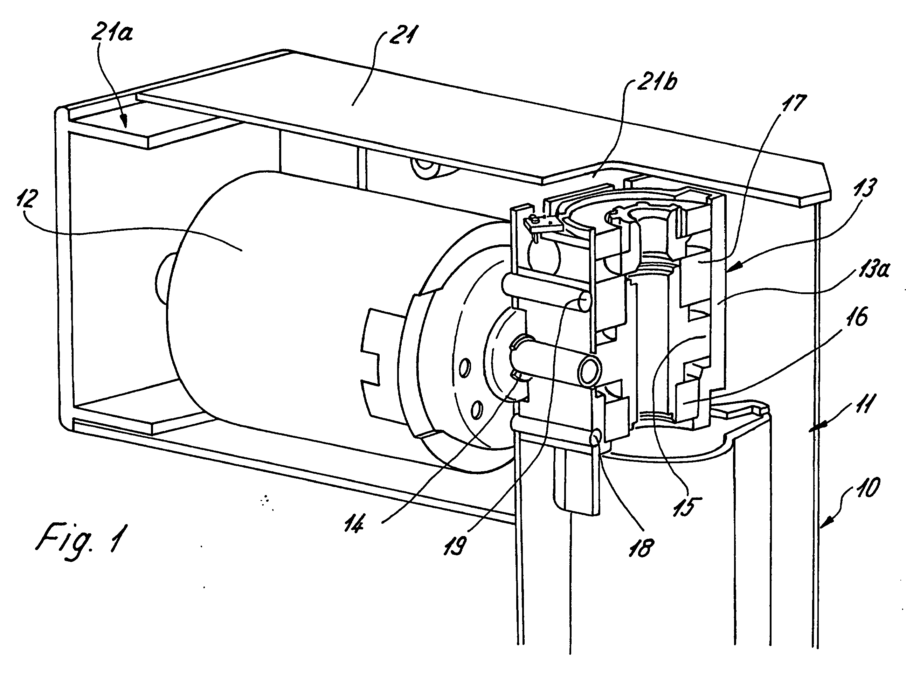

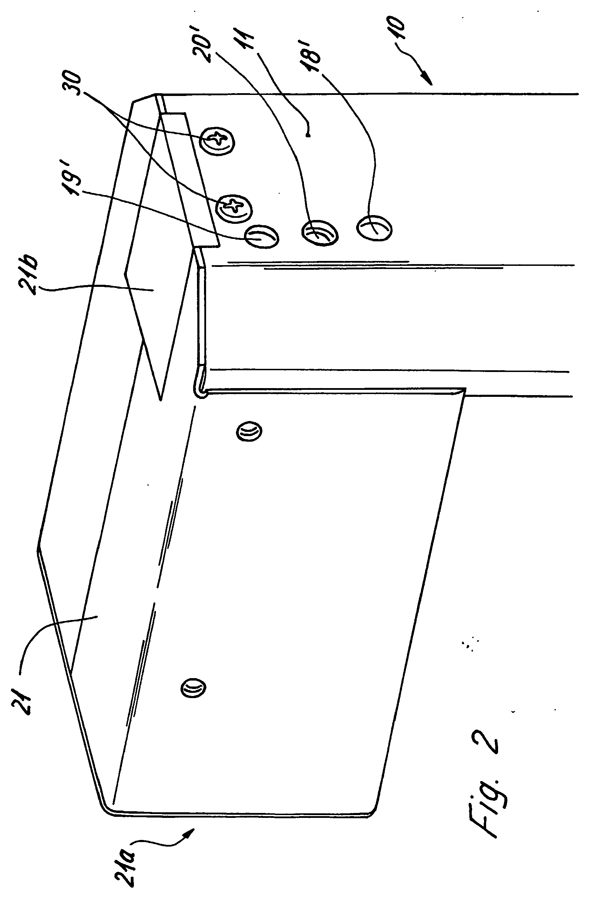

Aus Darstellungsgründen sind die einzelnen Bauteile in der Figur 1 vereinfacht dargestellt. Der elektromotorische Antrieb 10 enthält ein in vertikaler Richtung verfahrbares Führungsrohr 11, dessen Querschnitt beliebig sein kann. Der elektromotorische Antrieb enthält einen mit dem Führungsrohr in noch näher erläuterter Weise verbundenen Antriebsmotor 12 und ein im oberen Bereich des Führungsrohres 11 fest eingesetztes Getriebe 13, welches ein Getriebegehäuse 13a aufweist, welches so gestaltet ist, daß es schließend im Führungsrohr 11 angeordnet und damit verbunden, beispielsweise verschraubt ist. Das Getriebe 13 ist im dargestellten Ausführungsbeispiel ein Schneckentrieb mit einer Schnecke 14, die in der Figur 1 nur andeutungsweise dargestellt ist und die mit einem drehbar gelagerten Schneckenrad 15 in Eingriff steht. Die Schnecke 14 kann drehfest auf den Abtriebszapfen des Antriebsmotors 12 aufgesetzt werden oder der Abtriebszapfen könnte als Schnecke gestaltet sein. Das Schneckenrad 15 ist in Lagern 16, 17 drehbar gelagert. In nicht näher erläuterter Weise wird vom Schneckenrad 15 eine nicht dargestellte Spindel direkt oder indirekt angetrieben, wodurch das Ausfahren des Führungsrohres 11 erreicht wird. Für die Festlegung des Antriebsmotors 12 ist das Getriebegehäuse 13a mit zwei Durchsteckkanälen 18, 19 ausgestattet, die übereinander liegen. Durch diese Kanäle hindurch werden Befestigungsschrauben gesteckt, die mit der stirnseitigen Wandung des Antriebsmotors 12 verschraubt sind. Dadurch wird der Antriebsmotor 12 gegen eine Fläche des Getriebegehäuses 13 gezogen. Mittig zwischen den beiden Durchsteckkanälen 18, 19 liegt noch eine in der Figur 2 erkennbare Öffnung 20 für eine parallel zu den Befestigungsschrauben stehende Justierschraube, um die Schnecke 14 gegenüber dem Schneckenrad 15 einstellen zu können. Das Getriebegehäuse 13 mit dem aufgeschraubten Motor 12 wird mit mindestens einer Fläche an der Innenkontur des Führungsrohres 11, beispielsweise mittels Schrauben 30 befestigt. Das Führungsrohr 11 besitzt Durchgangslöcher 18', 19', 20', durch die die Befestigungsschrauben 18, 19 und die Justierschraube 20 des Motors 12 zu erreichen sind. In nicht näher erläuterter Weise ist das Getriebe mit einem Positionsgeber ausgestattet, um die jeweilige Position des ausfahrbaren Führungsrohres 11 zu erfassen. Wie die Figuren 1 und 2 zeigen, ist der Antriebsmotor 12 in einem kastenartigen Gehäuse 21 angeordnet, welches im dargestellten Ausführungsbeispiel durch einen Deckel 21 a verschlossen ist. Das kastenartige Gehäuse 21 übergreift auch das Führungsrohr 11 und besitzt in weiter ausgestalteter Form eine Öffnung 21b, die durch einen Deckel verschlossen und zur Montage- und/oder Wartungszwecken benutzt werden kann. Der Antriebsmotor 12 ist im Normalfall ein Gleichstrommotor, der mit einer Sicherheitskleinspannung betrieben wird. Der elektromotorische Antrieb ist auch mit einer nicht näher erläuterten Steuerung und eine Handbedienvorrichtung ausgestattet.

Die Erfindung ist nicht auf das dargestellte Ausführungsbeispiel beschränkt. Wesentlich ist, daß mit einer geringstmöglichen Anzahl von Bauteilen ein elektromotorischer Antrieb, insbesondere ein als Hubeinrichtung gestalteter Antrieb geschaffen wird, wobei das Getriebe 13 ein an die Innenkontur oder an einem Teil der Innenkontur des Führungsrohres 11 angepaßtes Getriebegehäuse 13a aufweist.

## Patentansprüche

1. Elektromotorischer Möbelantrieb (10), insbesondere ein Teleskopantrieb mit einem Antriebsmotor (12), einem die Motordrehzahl herabsetzenden, ein Getriebegehäuse (13a) aufweisendes Getriebe (13), mit einem feststehenden und wenigstens einem ausfahrbaren Führungsrohr (11) und mit einer rotierend antreibbaren, in Längsrichtung der Führungsrohre (11) stehende Spindel, **dadurch gekennzeichnet, dass** das Getriebegehäuse (13a) schließend in einem Führungsrohr (11) angeordnet ist, und dass der Antriebsmotor (12) seitlich neben dem das Getriebegehäuse (13a) aufnehmenden Führungsrohr (11) angeordnet ist.

2. Elektromotorischer Möbelantrieb nach Anspruch 1, **dadurch gekennzeichnet, dass** der Abtriebszapfen des Antriebsmotors (12) gegenüber der Mittellängsachse des zugehörigen Führungsrohres (11) versetzt ist.

3. Elektromotorischer Möbelantrieb nach Anspruch 1, **dadurch gekennzeichnet, dass** das Getriebe (13) ein aus einer Schnecke (14) und einem Schneckenrad (15) bestehender Schneckentrieb ist.

4. Elektromotorischer Möbelantrieb nach einem oder mehreren der vorhergehenden Ansprüche 1 bis 3, **dadurch gekennzeichnet, dass** der Antriebsmotor (12) durch wenigstens zwei durch Schraubkanäle (18, 19) des Getriebegehäuses (13a) geführte Befestigungsschrauben derart festgelegt ist, dass die dem Getriebe zugewandte Stirnfläche des Antriebsmotors (12) vorzugsweise gegen das Getriebegehäuse (13a) gezogen ist.

5. Elektromotorischer Möbelantrieb nach einem oder mehreren der vorhergehenden Ansprüche 1 bis 4, **dadurch gekennzeichnet, dass** die Stellung des Antriebsmotors (12) zum Getriebe (13) mittels einer Justiereinrichtung einstellbar ist.

6. Elektromotorischer Möbelantrieb nach Anspruch 5, **dadurch gekennzeichnet, dass** die Justiereinrichtung aus wenigstens einer Justierschraube besteht, die parallel und im Abstand zu den Befestigungsschrauben für den Antriebsmotor (12) verläuft.

7. Elektromotorischer Möbelantrieb nach einem oder mehreren der vorhergehenden Ansprüche 1 bis 6, **dadurch gekennzeichnet, dass** die Außenkontur des Getriebegehäuses (13a) der Innenkontur des Führungsrohres (11) entspricht oder annähernd entspricht.

8. Elektromotorischer Möbelantrieb nach einem oder mehreren der vorhergehenden Ansprüche 1 bis 7, **dadurch gekennzeichnet, dass** das Schneckenrad (15) einen drehfest aufgesetzten, als Impulsgeber wirkenden Ring aufweist.

9. Elektromotorischer Möbelantrieb nach einem oder mehreren der vorhergehenden Ansprüche 1 bis 8, **dadurch gekennzeichnet, dass** der elektromotorische Antrieb (10) mit einem Positionsgeber ausgestattet ist.

10. Elektromotorischer Möbelantrieb nach einem oder mehreren der vorhergehenden Ansprüche 1 bis 9, **dadurch gekennzeichnet, dass** der Antriebsmotor (12) in einem kastenartigen Gehäuse (21) angeordnet ist, dessen obere Wandung oder dessen Deckel (21a) das das Getriebegehäuse (13a) aufnehmende Führungsrohr (11) übergreift.

11. Elektromotorischer Möbelantrieb nach einem oder mehreren der vorhergehenden Ansprüche 1 bis 10, **dadurch gekennzeichnet, dass** das Getriebe (13) und der Antriebsmotor (12) dem oberen Endbereich eines ausfahrbaren Führungsrohres (11) zugeordnet sind.

12. Elektromotorischer Möbelantrieb nach einem oder mehreren der vorhergehenden Ansprüche 1 bis 11, **dadurch gekennzeichnet, dass** das Getriebegehäuse (13a) mittels Schrauben (30) am Führungsrohr (11) festgelegt ist.

## Claims

1. Electromotive furniture drive (10), in particular a telescopic drive, having a drive motor (12), a gear mechanism (13) which reduces the rotational speed of the motor and has a gear mechanism housing (13a), having one fixed and at least one telescopic guide tube (11), and having a spindle which can be driven in rotation and extends in the longitudinal direction of the guide tubes (11), **characterized in that** the gear mechanism housing (13a) is arranged such that it is enclosed in a guide tube (11), and **in that** the drive motor (12) is arranged to the side of the guide tube (11) which accommodates the gear mechanism housing (13a).

2. Electromotive furniture drive according to Claim 1, **characterized in that** the output journal of the drive motor (12) is offset in relation to the longitudinal centre axis of the associated guide tube (11).

3. Electromotive furniture drive according to Claim 1, **characterized in that** the gear mechanism (13) is a worm drive which comprises a worm (14) and a worm gear (15).

4. Electromotive furniture drive according to one or more of the preceding Claims 1 to 3, **characterized in that** the drive motor (12) is fixed by at least two fastening screws, which are passed through screw channels (18, 19) in the gear mechanism housing (13a), in such a way that that end face of the drive motor (12) which faces the gear mechanism is preferably drawn towards the gear mechanism housing (13a).

5. Electromotive furniture drive according to one or more of the preceding Claims 1 to 4, **characterized in that** the position of the drive motor (12) in relation to the gear mechanism (13) can be adjusted by means of an adjusting device.

6. Electromotive furniture drive according to Claim 5, **characterized in that** the adjusting device comprises at least one adjusting screw which runs parallel to and at a distance from the fastening screws for the drive motor (12).

7. Electromotive furniture drive according to one or more of the preceding Claims 1 to 6, **characterized in that** the outer contour of the gear mechanism housing (13a) corresponds or approximately corresponds to the inner contour of the guide tube (11).

8. Electromotive furniture drive according to one or more of the preceding Claims 1 to 7, **characterized in that** the worm gear (15) has a ring which is fitted in a rotationally fixed manner and acts as a pulse transmitter.

9. Electromotive furniture drive according to one or more of the preceding Claims 1 to 8, **characterized in that** the electromotive drive (10) is equipped with a position sensor.

10. Electromotive furniture drive according to one or more of the preceding Claims 1 to 9, **characterized in that** the drive motor (12) is arranged in a box-like housing (21) whose upper wall or cover (21a) engages over the guide tube (11) which accommodates the gear mechanism housing (13a).

11. Electromotive furniture drive according to one or more of the preceding Claims 1 to 10, **characterized in that** the gear mechanism (13) and the drive motor (12) are associated with the upper end region of a telescopic guide tube (11).

12. Electromotive furniture drive according to one or more of the preceding Claims 1 to 11, **characterized in that** the gear mechanism housing (13a) is fixed to the guide tube (11) by means of screws (30).

## Revendications

1. Commande de meuble (10) à moteur électrique, en particulier commande télescopique avec un moteur d'entraînement (12), une transmission (13) réduisant la vitesse de rotation du moteur et comportant un boîtier de transmission (13a), avec un tube de guidage (11) fixe et au moins un tube de guidage (11) extractible et avec une broche pouvant être entraînée en rotation et s'étendant dans la direction longitudinale des tubes de guidage (11), **caractérisée en ce que** le boîtier de transmission (1 3a) est disposé dans un tube de guidage (11) de manière à le fermer, et **en ce que** le moteur d'entraînement (12) est disposé latéralement, à côté du tube de guidage (11) recevant le boîtier de transmission (1 3a).

2. Commande de meuble à moteur électrique selon la revendication 1, **caractérisée en ce que** le bout d'arbre de sortie du moteur d'entraînement (12) est décalé par rapport à l'axe médian longitudinal du tube de guidage (11) correspondant.

3. Commande de meuble à moteur électrique selon la revendication 1, **caractérisée en ce que** la transmission (13) est une transmission à vis sans fin constituée d'une vis sans fin (14) et d'une roue pour vis (15).

4. Commande de meuble à moteur électrique selon une ou plusieurs des revendications 1 à 3 précédentes, **caractérisée en ce que** le moteur d'entraînement (12) est fixé par au moins deux vis de fixation traversant des canaux pour vis (18, 19) du boîtier de transmission (13a), de manière que la face frontale du moteur d'entraînement (12), tournée vers la transmission, soit tirée de préférence contre le boîtier de transmission (13a).

5. Commande de meuble à moteur électrique selon une ou plusieurs des revendications 1 à 4 précédentes, **caractérisée en ce que** la position du moteur d'entraînement (12) par rapport à la transmission (13) est réglable au moyen d'un dispositif d'ajustage.

6. Commande de meuble à moteur électrique selon la revendication 5, **caractérisée en ce que** le dispositif d'ajustage est constitué d'au moins une vis d'ajustage qui s'étend parallèlement et à distance des vis de fixation du moteur d'entraînement (12).

7. Commande de meuble à moteur électrique selon une ou plusieurs des revendications 1 à 6 précédentes, **caractérisée en ce que** le contour extérieur du boîtier de transmission (13a) correspond approximativement au contour intérieur du tube de guidage (11).

8. Commande de meuble à moteur électrique selon une ou plusieurs des revendications 1 à 7 précédentes, **caractérisée en ce que** la roue pour vis (15) comporte un anneau placé solidairement en rotation dessus, qui sert d'émetteur d'impulsions.

9. Commande de meuble à moteur électrique selon une ou plusieurs des revendications 1 à 8 précédentes, **caractérisée en ce que** l'entraînement à moteur électrique (10) est équipé d'un transmetteur de position.

10. Commande de meuble à moteur électrique selon une ou plusieurs des revendications 1 à 9 précédentes, **caractérisée en ce que** le moteur d'entraînement (12) est disposé dans un boîtier (21) de type caisson dont la paroi supérieure ou son couvercle (21 a) passe sur le tube de guidage (11) recevant le boîtier de transmission (13a).

11. Commande de meuble à moteur électrique selon une ou plusieurs des revendications 1 à 10 précédentes, **caractérisée en ce que** la transmission (13) et le moteur d'entraînement (12) sont associés à la zone d'extrémité supérieure d'un tube de guidage (11) extractible.

12. Commande de meuble à moteur électrique selon une ou plusieurs des revendications 1 à 11 précédentes, **caractérisée en ce que** le boîtier de transmission (13a) est fixé au moyen de vis (30) sur le tube de guidage (11).
